Europäisches Patentamt

European Patent Office

Office européen des brevets

(19)

(11) **EP 0 987 456 B1**

(12) **FASCICULE DE BREVET EUROPEEN**

(45) Date de publication et mention
de la délivrance du brevet:
**11.08.2004 Bulletin 2004/33**

(51) Int Cl.⁷: **F16C 33/10**, F16C 33/20,
F16C 33/04

(21) Numéro de dépôt: **99402251.5**

(22) Date de dépôt: **14.09.1999**

(54) **Organes de guidage glissants, lubrifiés à la graisse, à bas coefficient de frottement et à durée de vie améliorée**

Reibungsarme Gleitkörper mit Fettschmierung und verbesserter Lebensdauer

Low friction sliding members with grease lubrication and improved service life

(84) Etats contractants désignés:
**AT BE CH CY DE DK ES FI FR GB GR IE IT LI LU MC NL PT SE**
Etats d'extension désignés:
**RO**

(30) Priorité: **16.09.1998 FR 9811555**

(43) Date de publication de la demande:
**22.03.2000 Bulletin 2000/12**

(73) Titulaire: **CENTRE STEPHANOIS DE RECHERCHES MECANIQUES HYDROMECANIQUE ET FROTTEMENT
F-42160 Andrezieux-Boutheon (FR)**

(72) Inventeurs:
• **Georges, Etienne
42000 Saint-Etienne (FR)**
• **Tourneux, Daniel
42700 Firminy (FR)**

(74) Mandataire: **Santarelli
14, avenue de la Grande Armée,
B.P. 237
75822 Paris Cedex 17 (FR)**

(56) Documents cités:
EP-A- 0 168 663        EP-A- 0 435 482
DE-A- 2 323 895        DE-A- 3 241 002
GB-A- 1 518 332        GB-A- 2 021 707
US-A- 4 573 807        US-A- 5 462 362

**Description**

La présente invention concerne des composants mécaniques graissés. Plus précisément, l'invention se rapporte à des composants mécaniques graissés assurant par frottement de glissement une fonction de guidage en translation ou en rotation, en mouvement continu ou alternatif et conçus pour répondre efficacement aux préoccupations de nombreux secteurs industriels en matière de simplification du graissage et de réduction de la fréquence d'entretien.

On connaît des dispositifs lubrifiés à la graisse dans lesquels, grâce à des moyens appropriés d'étanchéité, il est possible de faire frotter l'une contre l'autre deux pièces mécaniques, même soumises à des contraintes de charge très élevées, avec un très bas coefficient de frottement : des exemples en sont donnés dans l'ouvrage "théorie et pratique industrielle du frottement", par JJ. CAUBET, Dunod Technip éditeur, 1964, chapitre 13.

FR-A-1 342 910 du 2 octobre 1962, complété par son certificat d'addition FR-E-82950 du 17 janvier 1963, décrit un mode de mise en oeuvre d'un tel dispositif dans le cas de paliers à auto-alignement pour fortes charges, et comportent les caractéristiques du préambule de la revendication 1.

De tels dispositifs, dont l'efficacité technique est reconnue, présentent toutefois un inconvénient majeur, lié à la complexité de leur réalisation pratique, qui conduit à des coûts de mise en oeuvre élevés, incompatibles avec les exigences actuelles de la plupart des secteurs industriels concernés.

Un objet de la présente invention est donc de fournir un dispositif de guidage pour organes mécaniques permettant d'éviter l'emploi d'un système d'étanchéité.

Un autre objet de l'invention est de proposer un tel dispositif efficace et bon marché dans le domaine considéré.

D'autres objets et avantages de l'invention apparaîtront à la lecture de la description ci-après.

L'invention propose un dispositif de guidage pour organes mécaniques constitué de deux pièces destinées à coopérer par frottement de glissement, une des deux pièces, dite pièce lisse, ayant une surface fonctionnelle, c'est-à-dire de frottement, lisse, et l'autre pièce, dite pièce percée, ayant au moins une surface fonctionnelle, c'est-à-dire de frottement, comportant des cavités débouchantes destinées à recevoir une graisse du type pâte lubrifiante et notamment une graisse EP (graisse extrême pression) comprenant un constituant de type savon, un constituant de type huile et un additif extrême pression, caractérisé en ce que l'angle de contact entre ladite surface fonctionnelle de ladite pièce lisse et ladite graisse, mesuré à une température dite température de mesure, qui est de $15° \pm 5°C$ en dessous de la température à laquelle il y a un début de séparation entre ledit constituant de type savon et ledit constituant de type huile et/ou un début d'évaporation dudit constituant de type huile, est compris entre 20 et 40 degrés, et en ce que le matériau de ladite pièce percée est choisi de telle sorte que l'angle de contact, mesuré à ladite température de mesure, entre ladite surface fonctionnelle de la pièce percée et ladite graisse est compris entre 45 et 75 degrés.

Le terme graisse EP, désignant une graisse extrême pression est bien connu de l'homme de l'art. Par "graisse extrême pression", il faut entendre une graisse capable de résister sans dommage à une charge élevée. Des exemples de telles graisses sont celles au lithium de type SNR-LUB EP classe NLGI 2, ou bien de type KLÜBER CENTOPLEX GLP 402 NLGI 2, ou bien encore les graisses au lithium et lubrifiants solides de type KLÜBER COSTRAC GL 1501 MG NLGI 2.

Il faut noter qu'aussi bien la pièce lisse que la pièce percée peuvent avoir chacune une surface non fonctionnelle mais ce n'est pas obligatoire.

Les deux pièces, la pièce lisse et la pièce percée, sont destinées à coopérer par frottement de glissement, en translation ou en rotation, en mouvement continu ou alternatif.

Chacune des deux pièces peut être de forme plane, cylindrique, ou sphérique.

Bien qu'elle soit couramment employée par l'homme de l'art, la notion de l'angle au contact d'une goutte d'un produit liquide ou visqueux posée sur une surface solide ne fait pas l'objet d'une normalisation, ni même d'une méthode de mesure parfaitement standardisée, surtout lorsque ledit produit est une graisse.

Les conditions expérimentales dans lesquelles la mesure de l'angle de contact est effectuée sont donc indiquées ci-après.

Mesure de l'angle de contact selon l'invention :

D'abord, on dégraisse la surface du corps solide sur laquelle on veut faire la mesure puis on y dépose un cordon rectiligne de graisse. On chauffe ensuite la pièce jusqu'à ce que la température de sa face en contact avec le cordon de graisse atteigne une valeur supérieure de $20 \pm 5°C$ à la température limite d'utilisation de la graisse. On la maintient à cette température pendant la durée nécessaire pour que la graisse soit rendue suffisamment liquide pour commencer à s'étaler sur la surface (environ 90 secondes). On arrête alors le chauffage de la pièce et on la laisse refroidir. Ceci a pour effet de figer la forme de la goutte et permet la mesure de son angle de contact à la température ambiante.

Des matériaux appropriés pour constituer la pièce lisse selon l'invention sont notamment choisis parmi les aciers, par exemple les aciers cémentés, trempés, rectifiés, les aciers trempés HF rectifiés, les aciers durcis puis revêtus de chrome dur, les aciers nitrurés et les aciers carbonitrurés, le chrome et le nickel, ainsi que parmi les aciers revêtus de céramique.

Il y a lieu de mesurer à chaque fois l'angle de contact entre le matériau devant constituer la pièce lisse et la graisse, qui doit être compris entre 20 et 40 degrés, pour déterminer si ce matériau est effectivement approprié selon l'invention.

Le matériau constituant la pièce percée peut être un matériau massif. Celui-ci sera habituellement choisi parmi les matériaux polymères et les matériaux copolymères. On ne peut cependant exclure que d'autres corps puissent convenir à partir du moment où leur angle de contact avec la graisse satisfait aux conditions spécifiées.

Des matériaux appropriés pour constituer la pièce percée selon l'invention sont notamment choisis parmi les polyimides, les polyimides chargés, par exemple les polyimides chargés par du graphite, les résines époxy, les résines époxy chargées, telles les résines époxy chargées par du bisulfure de molybdène $MoS_2$, les résines polyacétales, le polyéthylène, les fluorocarbones substitués ou non, et notamment le PFA (perfluoroalcoxy), le polyéthylène téréphtalate, le polyéthersulfone, les polyamides, ainsi que le polyéther-éthercétone.

Il y a également lieu de mesurer à chaque fois l'angle de contact entre le matériau devant constituer la pièce percée et la graisse, qui doit être compris entre 45 et 75 degrés, pour déterminer si ce matériau est effectivement approprié selon l'invention.

Le matériau constituant la pièce percée peut également être un substrat recouvert d'un revêtement. Le revêtement est habituellement déposé en couche mince, ayant généralement une épaisseur d'environ 5 à environ 50 µm.

Dans ce cas, le substrat est un matériau quelconque, sous forme massive ou sous forme d'un feuillard mince roulé, par exemple un acier au carbone non allié, un acier allié, un acier inoxydable, un alliage d'aluminium, un alliage cuivreux, un alliage de titane, etc.

Le feuillard mince roulé est avantageusement réalisé conformément au brevet de la Demanderesse FR-B-2 693 520.

Quand le matériau constituant la pièce percée est un substrat recouvert d'un revêtement, celui-ci est avantageusement un acier préalablement nitruré, puis recouvert d'un polymère.

Le matériau constituant le revêtement est alors choisi parmi les matériaux polymères et les matériaux copolymères, notamment parmi les polyimides, les polyimides chargés, par exemple les polyimides chargés par du graphite, les résines époxy, les résines époxy chargées, telles les résines époxy chargées par du bisulfure de molybdène $MoS_2$, les résines polyacétales, le polyéthylène, les fluorocarbones substitués ou non, et notamment le PFA (perfluoroalcoxy), le fluoroéthylène ou le fluoropropylène, le polyéthylène téréphtalate, le polyéthersulfone, les polyamides, ainsi que le polyéther-éthercétone.

Quand le matériau constituant la pièce percée est un substrat recouvert d'un revêtement, celui-ci est avantageusement un acier ayant subi préalablement un traitement de durcissement superficiel. Ce traitement de durcissement superficiel peut être un traitement thermochimique provoquant la diffusion d'un hétéro élément, par exemple l'azote, dans l'acier. Ledit traitement thermochimique est de préférence une nitruration dans un bain fondu de cyanates et carbonates de métaux alcalins et contenant en outre avantageusement une quantité d'au moins une espèce soufrée, par exemple selon le FR-B-2 708 623 de la Demanderesse.

Dans un mode de réalisation particulièrement avantageux de l'invention, la pièce percée est réalisée sous forme d'un feuillard mince roulé, conformément au FR-B-2 693 520 précité, en acier nitruré selon le FR-B-2 708 623 précité, et revêtu d'un polymère.

Il faudra dans ce cas encore vérifier que l'angle de contact du matériau du revêtement de la pièce percée avec la graisse est compris entre 45 et 75 degrés, pour déterminer si ce revêtement est effectivement approprié selon l'invention.

Selon un mode de réalisation préféré de l'invention, les cavités, constituant des "plots de sustentation", sont réparties sur sensiblement la totalité de la surface de la pièce percée.

Il est alors avantageux qu'au moins trois cavités contribuent à supporter une charge appuyant les deux pièces.

Il est alors également avantageux que l'aire occupée par les cavités sur la développée de la surface fonctionnelle de la pièce percée représente entre environ 20 et environ 40 % de l'aire totale de ladite développée.

Les cavités peuvent ou non être sensiblement égales entre elles.

Les cavités peuvent ou non être réparties sensiblement régulièrement sur la totalité de la surface de la pièce percée.

Dans le cas où les cavités ne sont sensiblement pas égales entre elles et/ou sont sensiblement irrégulièrement réparties sur la totalité de la surface de la pièce percée, la plus courte distance entre les bords des deux cavités juxtaposées sera avantageusement supérieure à environ 2 mm.

La surface débouchante de chaque cavité est habituellement comprise entre environ 3 mm$^2$ et environ 40 mm$^2$, avantageusement entre environ 10 mm$^2$ et environ 30 mm$^2$.

Selon une disposition avantageuse de l'invention, les cavités débouchant sur la surface fonctionnelle de la pièce percée ne communiquent pas entre elles du côté de ladite surface fonctionnelle de ladite pièce percée.

Les cavités peuvent ou non communiquer du côté d'une surface non fonctionnelle de la pièce percée. Dans le cas où les cavités communiquent du côté d'une surface non fonctionnelle de la pièce percée, par exemple par un système de canaux, un couvercle recouvrira avantageusement les cavités.

Au sens de la présente invention quand on parle de cavités communiquant entre elles, il faut entendre que lesdites cavités sont "reliées par des canaux (conduits) volontairement créés sur la surface par enlèvement de matière".

Les cavités peuvent par exemple être cylindriques.

La pièce plane et la pièce percée peuvent être de forme plane, cylindrique ou sphérique.

La présente invention permet d'obtenir un dispositif arbre/palier dans lequel la pièce lisse est l'arbre et la pièce percée est le palier, un dispositif glissière/patin dans lequel la pièce lisse est la glissière et la pièce percée est le patin, un dispositif rotule/coupelle dans lequel la pièce lisse est la rotule et la pièce percée est la coupelle.

Outre les dispositifs de guidage composés de deux pièces frottantes, la présente invention permet de concevoir une disposition où il y a trois et non plus deux pièces frottantes. Par exemple, dans le cas d'une pièce percée sous forme d'une bague, les deux surfaces (l'alésage intérieur et le cylindre extérieur) de la bague percée sont alors fonctionnelles.

Dans cette configuration, la bague percée devient "flottante", sa vitesse de rotation n'étant plus alors qu'une fraction, fonction des coefficients de frottement, de celle de l'arbre.

L'intérêt d'une telle disposition est relativement limité dans le cas d'un système oscillant du type articulation car les vitesses de glissement mises en jeu sont alors relativement faibles, de l'ordre de 0,2 m/s. Il devient en revanche beaucoup plus important pour des systèmes de guidage en rotation continue, notamment ceux où les vitesses de glissement atteignent des vitesses élevées d'environ 8 à 10 m/s, voire plus. Une bague conforme à l'invention peut alors avantageusement remplacer à moindre coût un organe de guidage de conception plus complexe, par exemple un roulement à aiguilles.

La description sera mieux comprise en référence aux Figures annexées dans lesquelles:

- la Figure 1 illustre schématiquement le principe de base de l'art antérieur selon FR 910 999 et son certificat d'addition FR 921 708,
- les Figures 2 à 5 illustrent schématiquement la mesure de l'angle de contact selon l'invention,
- la Figure 6 est une vue schématique en coupe d'un organe de guidage du type glissière/patin selon l'invention,
- la Figure 7 est une vue de dessous du patin de la Figure 6,
- la Figure 8 représente schématiquement une variante organe de guidage du type glissière/patin de la Figure 6,
- la Figure 9 représente schématiquement un organe de guidage selon l'invention dans la configuration arbre/palier,
- la Figure 10 représente schématiquement le coussinet de la Figure 9,
- la Figure 11 représente schématiquement un dispositif de type rotule selon l'invention,
- la Figure 12 représente schématiquement un dispositif de type patin/piste dans lequel il y a basculement du patin,
- la Figure 13 représente schématiquement le support du patin par trois plots.
- la Figure 14 représente schématiquement une configuration arbre/palier dans laquelle il y a trois pièces frottantes, avec deux surfaces fonctionnelles,
- la Figure 15 représente schématiquement une configuration arbre/palier en rotation continue à deux pièces frottantes, dans laquelle une fourrure est frettée sur l'arbre au niveau de la surface fonctionnelle du palier (bague) percé,
- la Figure 16 représente schématiquement une disposition à trois pièces frottantes et avec deux surfaces fonctionnelles, qui est une variante de celle de la Figure 15, avec deux portées frettées, l'une d'un arbre, l'autre de l'alésage d'un carter.

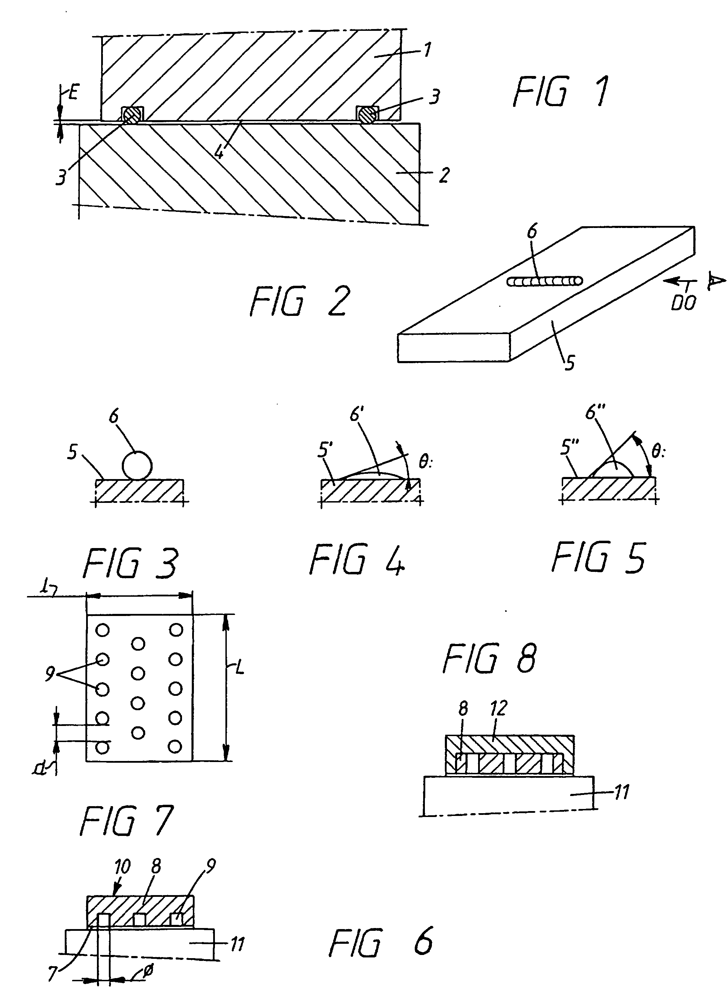

Sur la Figure 1 est représenté un patin 1, en l'occurrence en acier, destiné à frotter sur une piste 2, elle aussi en acier, contre laquelle il est appuyé avec une force résultante F. Dans la face inférieure du patin 1 a été réalisée une gorge circulaire, dans laquelle a pris place un joint torique 3, l'espace E ainsi ménagé à l'intérieur du joint torique étant rempli de graisse 4. Ainsi conçu le patin 1 est devenu "flottant", en étant porté par un véritable "plot" de graisse, ce qui permet l'obtention de très bas coefficients de frottement, typiquement inférieurs à 0,01, même sous charge élevée et en mouvement lent.

On notera à ce sujet qu'une disposition simplifiée du patin 1 de la Figure 1, dans laquelle le joint torique 3 aurait été supprimé, ne pourrait pas convenir. En effet, sous l'effet de la charge pressant 1 contre 2, la graisse serait en effet très rapidement chassée du contact; le frottement de 1 sur 2 s'effectuerait alors métal sur métal et un grippage interviendrait inéluctablement en un laps de temps très bref. En revanche, ceci ne se produit pas lorsque le joint 3 est en place, car alors la graisse 4 ne peut pas s'échapper, puisque la bague est étanche.

Pour la mesure de l'angle de contact θ selon l'invention, on commence par dégraisser correctement la surface 5 du corps solide sur laquelle on veut faire la mesure. Ensuite on dépose, à l'aide d'une seringue, sur la surface du corps solide sur laquelle on veut faire la mesure, un cordon rectiligne de graisse 6 d'environ 2 millimètres de diamètre (Figure 2).

La pièce est alors posée sur une plaque chauffante (non représentée), jusqu'à ce que la température de sa face en contact avec le cordon de graisse atteigne une valeur supérieure de $20 \pm 5°C$ à la température limite d'utilisation de la graisse. Elle y est maintenue pendant environ 90 secondes. La pièce est alors ôtée de la plaque chauffante et on la laisse refroidir, ce qui a pour effet de figer la forme de la goutte, permettant ainsi la mesure de son angle de contact à la température ambiante, grâce à un dispositif classique du type loupe binoculaire équipée d'un rapporteur d'angle. La direction de l'observation est indiquée par "DO". Les résultats obtenus sont schématisés aux Figures 3 (vue en coupe latérale du cordon de graisse 6 initial avant chauffage), 4 et 5 qui représentent chacune une vue en coupe latérale du cordon de graisse après chauffe, puis refroidissement, respectivement dans le cas d'une pièce lisse, 5', et d'une pièce percée, 5". Selon l'invention, dans le cas d'une pièce lisse, on doit avoir, $\theta$ = 20-40° (6') et dans le cas d'une pièce percée, $\theta$ = 45-75° (6").

Sur la Figure 6, représentant un dispositif patin 8/glissière 11, des cavités 9 ont été aménagées dans la face inférieure 7 du patin 8, c'est-à-dire celle qui est fonctionnelle et qui coopère avec la glissière 11 en frottement de glissement.

La Figure 7 représente la vue par en dessous du patin, c'est-à-dire sa surface fonctionnelle 7. Les cavités y sont cylindriques et disposées régulièrement. Elles ne communiquent pas entre elles du côté de cette face 7.

La développée de la surface frottante est ici la face inférieure 7 du patin 8, dont l'aire est égale au produit L x $\ell$, L et $\ell$ étant respectivement longueur et largeur du patin.

L'aire occupée par les cavités est égale à $n\pi\phi^2/4$ (n étant le nombre de cavités) et d est la plus courte distance séparant les bords en vis-à-vis de deux cavités juxtaposées.

Selon les dispositions préférées de l'invention, on doit avoir :

$$n\pi\phi^2/4 = 20 \text{ à } 40 \text{ \% (L x } \ell)$$

d > environ 2 mm

environ 3 mm$^2$ < $\pi\phi^2/4$ < environ 40 mm$^2$.

Dans la disposition représentée sur les Figures 6 et 7, les cavités ne débouchent pas du côté non fonctionnel 10 du patin.

On peut cependant imaginer qu'il en soit autrement, c'est-à-dire que les trous ne soient plus borgnes. Il importe alors d'éviter par un moyen approprié, tel un couvercle 12 recouvrant les cavités (Figure 8), que la graisse qui remplit les cavités ne puisse s'échapper par la surface arrière 10 non fonctionnelle du patin.

Dans la disposition représentée sur la Figure 7, les cavités ne communiquent pas entre elles du côté de la face 10. On peut néanmoins imaginer qu'elles puissent le faire, par exemple par un système de canaux appropriés.

Sur les Figures annexées, les cavités ont été représentées sous la forme de trous cylindriques, égaux entre eux et régulièrement disposés. Mais ceci n'est pas une condition nécessaire et il peut en être différemment, sans que pour autant ces autres dispositions sortent du cadre de l'invention.

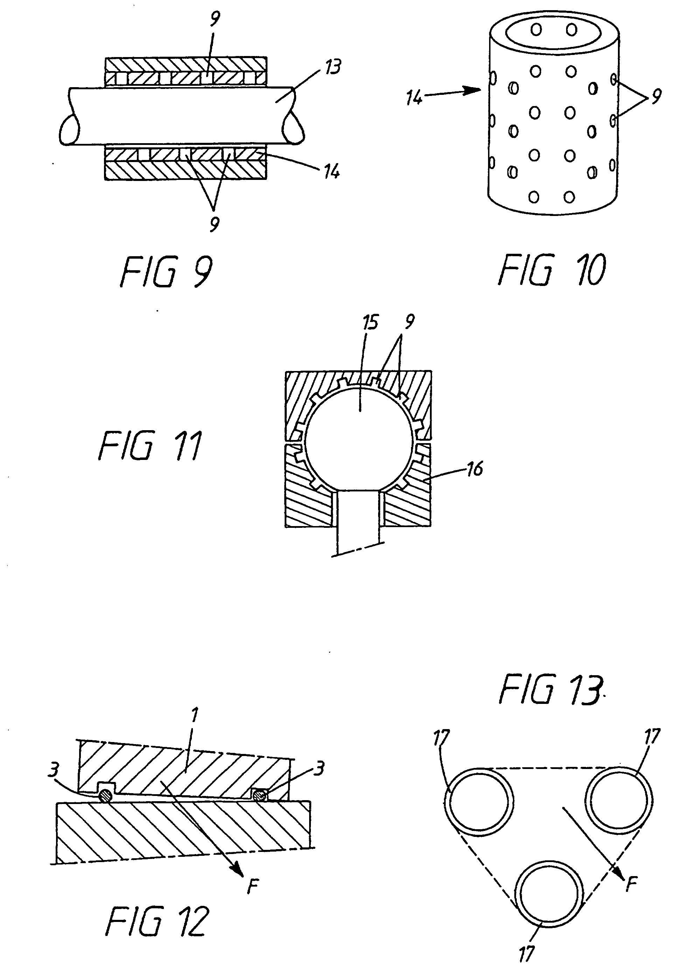

La Figure 9 représente un organe de guidage selon l'invention dans la configuration arbre 13/palier ou coussinet 14. Les cavités sont ménagées dans le coussinet 14 (Figure 10). Il convient dans ce cas de parler de surface développée du coussinet 14, celle-ci étant obtenue en fendant la bague selon une direction parallèle à son axe, puis en la déroulant jusqu'à obtention d'un feuillard rectangulaire. Toutes les considérations développées précédemment au titre du dispositif type patin/glissière, peuvent alors être transposées au système arbre/palier.

La Figure 11 représente un dispositif du type rotule 15/coupelle 16, réalisé conformément à l'invention, les cavités 9 sont réalisées dans les coupelles, c'est-à-dire les parties glissantes concaves.

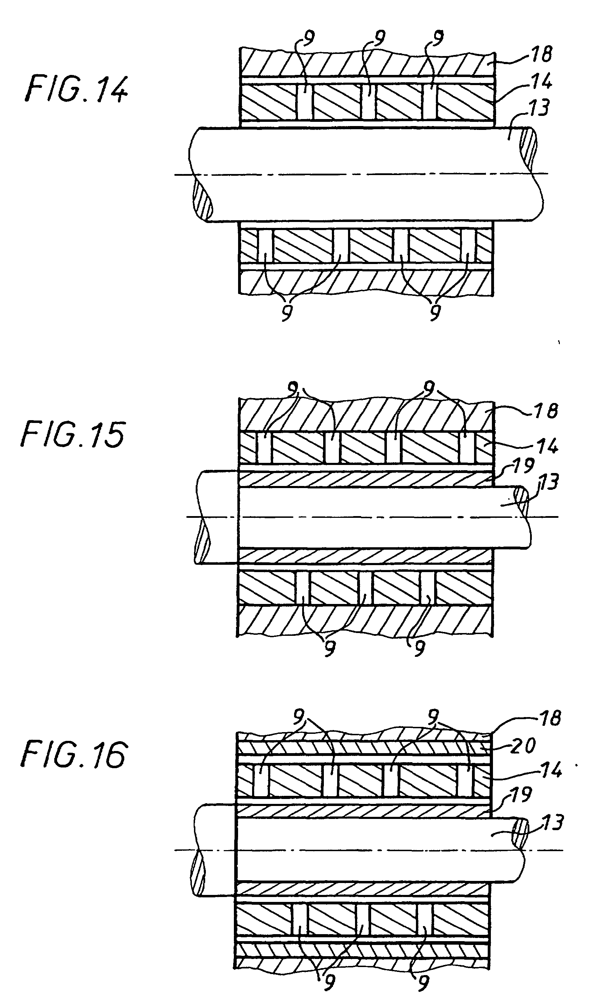

La Figure 12 reprend le patin et la piste de la Figure 1, mais dans une configuration où la charge F du patin ne donne pas une résultante passant par le centre du joint torique 3. Il y a alors basculement du patin 1 conduisant à des phénomènes néfastes de portées sur arêtes, générateurs de surcontraintes entraînant une détérioration prématurée des surfaces en contact glissant. Pour éviter cela, le patin 1 peut être supporté par au moins trois "plots" 17, la résultante de la charge appuyant le patin sur la piste tombant alors à l'intérieur du polygone de sustentation ainsi défini (Figure 13).

La Figure 14 représente un organe de guidage selon l'invention dans une configuration arbre/palier qui se distingue de celle de la Figure 9 par le fait qu'il y a trois pièces frottantes : l'arbre 13, le palier (bague 14) percé des trous 9 et le carter 18.

Selon cette disposition, il y a deux surfaces fonctionnelles sur la bague percée 14, l'une étant constituée de son alésage intérieur, l'autre de son cylindre extérieur.

Dans cette configuration la bague percée est "flottante".

La Figure 15 représente un montage à deux pièces frottantes, qui sont l'arbre 13 et le palier (bague 14) percé des trous 9. Sur l'arbre 13 a été frettée une portée 19 en acier à roulement du type 100C6. La bague 14 est elle-même emmanchée dur par son diamètre extérieur dans un alésage du carter 18.

La Figure 16 est une variante de la Figure 15 avec un palier (bague) percé "flottant", frottant sur deux portées 19 et 20 en acier à roulement du type 100C6, respectivement frettées sur l'arbre et dans l'alésage du carter.

La présente invention sera décrite plus en détail en référence aux Exemples suivants.

Exemple 1 (comparatif).

Cet exemple illustre des essais de paliers oscillants.

La configuration est arbre/palier (coussinet).

Nature de l'arbre : acier 16NC6 cémenté trempé.

Nature du palier (coussinet) : polyimide chargé 40 % de graphite, type PI 5508

Diamètre de l'arbre : 30 mm

Largeur du coussinet : $\ell$ = 20 mm

Longueur développée du coussinet: π x 30 = 94,25 mm

Mouvement : rotation alternée sur 90° d'arc, à la fréquence de 1 Hz

Pression calculée en surface projetée : 10 MPa

Vitesse de glissement : 0,2 m/s

Graisse extrême pression : au savon au lithium, type SNR-LUB EP, grade NLGI 2, températures d'utilisation - 30 à + 110°C

Graissage au montage, puis fonctionnement sans apport supplémentaire de graisse.

Pour la détermination des angles de contact θ pour arbre/graisse et palier/graisse, une moyenne de 5 mesures a été effectuée comme indiqué plus haut, avec des cordons de graisse déposés sur des échantillons parallélépipédiques, portés à 130°C pendant 90 secondes, puis refroidis.

Les résultats sont les suivants :

- pour l'arbre (acier 16NC6 cémenté trempé) : θ = 30°
- pour le palier (polyimide chargé 40 % de graphite) : θ = 60°

Cet exemple a été réalisé avec un coussinet lisse, c'est-à-dire en dehors du domaine de l'invention.

Résultats des essais :

- Coefficient moyen de frottement : 0,11
- Nombre d'oscillations avant augmentation rapide du coefficient de frottement : 35 000.

Exemple 2 (selon l'invention).

On reproduit l'Exemple 1, sauf que le coussinet est percé de 40 trous (cavités), chacun de 4 mm de diamètre, régulièrement disposés avec d (plus courte distance séparant les bords en vis-à-vis de deux cavités juxtaposées) = 4 mm.

Résultats des essais :

- Coefficient moyen de frottement : 0,009
- Nombre d'oscillations avant augmentation rapide du coefficient de frottement : > 250 000 (essai arrêté avant son terme).

Exemple 3 (comparatif).

On reproduit l'Exemple 1, sauf que pour le matériau constituant le coussinet on remplace le polyimide par un bronze type UE 12 P, qui est un alliage couramment utilisé pour les paliers.

Le coussinet est lisse, c'est-à-dire en dehors de l'invention.

L'angle de contact θ pour coussinet/graisse, mesuré dans les conditions de l'Exemple 1 = 35°.

Résultats des essais :

- Coefficient moyen de frottement : 0,12
- Nombre d'oscillations avant augmentation rapide du coefficient de frottement : 25 000.

Exemple 4 (comparatif).

On reproduit l'Exemple 2, sauf que pour le matériau constituant le coussinet percé on utilise au lieu du polyimide, un bronze type UE 12 P, qui est un alliage couramment utilisé pour les paliers.

L'angle de contact θ pour coussinet/graisse, mesuré dans les conditions de l'Exemple 1 = 35°, c'est-à-dire en dehors de la gamme de l'invention pour la pièce percée.

Résultats des essais :

- Coefficient moyen de frottement : 0,09
- Nombre d'oscillations avant augmentation rapide du coefficient de frottement : 80 000.

Commentaires sur les Exemples 1 à 4

1) Lorsque les coussinets sont lisses, c'est-à-dire en dehors de l'invention, leur durée de vie est du même ordre de grandeur, qu'ils soient en polyimide ou en bronze. Les coefficients de frottement sont eux aussi comparables et correspondent à un régime mixte, celui-ci se poursuivant tant qu'il subsiste du lubrifiant dans le contact. Lorsque la graisse, qui peut s'échapper par les bords du palier, est totalement éliminée, le coefficient de frottement croît rapidement; alors le palier s'échauffe, puis se détériore par effet thermique, avec des collages de polyimide ou de bronze du coussinet sur l'arbre en acier.

2) Les durées de vie des coussinets percés polyimide (selon la présente invention) et bronze (en dehors de l'invention) sont significativement plus longues que celles des coussinets lisses. Au démontage, à la fin des essais, on constate que la totalité de la graisse disponible dans les cavités a été consommée. On trouve là l'aspect bénéfique des "réserves de lubrifiant" que constituent les cavités.

3) Le coefficient de frottement du coussinet en bronze percé est inférieur à celui du coussinet en bronze lisse. Ceci peut être mis au moins en partie sur le compte d'une alimentation du contact en graisse plus régulière et d'une répartition plus uniforme de cette graisse dans ce contact, ce qui limite les risques de contact métal/métal entre le bronze du palier et l'acier de l'arbre.

4) En revanche, l'explication en 3) ne rend pas compte du très bas coefficient de frottement enregistré avec le coussinet en polyimide percé (selon l'invention). En effet, la valeur de 0,009 correspond typiquement à un régime de lubrification hydrodynamique, ce qu'il est inattendu d'observer avec un palier oscillant relativement chargé et dont la vitesse de glissement n'est pas très élevée.

La durée de vie du palier en polyimide percé (plus de 250 000 oscillations) est elle aussi surprenante quand on la compare à celle du coussinet en bronze (80 000 oscillations).

Schématiquement tout se passe comme si le double fait que le coussinet soit en polyimide et qu'il soit percé, conduisait d'une part à une amélioration de l'effet de portance, d'autre part à une augmentation du laps de temps nécessaire pour épuiser la réserve de lubrifiant.

La modélisation théorique de ces phénomènes n'a pas été effectuée et on ne peut qu'avancer des hypothèses explicatives. Celles-ci seront commodément illustrées en référence à la Figure 1. La graisse 4 contenue dans l'espace disponible E entre le patin 1, la piste 2 et le joint torique 3 ne transmet latéralement qu'une fraction de la pression normale qu'elle reçoit, cette fraction étant d'autant plus faible que ladite graisse est plus visqueuse (ceci vient du fait que la graisse obéit aux lois de la rhéologie contrairement aux huiles qui, elles, obéissent aux lois de Pascal et de l'hydrostatique).

On peut donc tolérer une charge relativement élevée, c'est-à-dire une amélioration de l'effet de portance, et un jeu relativement important, c'est-à-dire une augmentation de la réserve de lubrifiant, avant qu'il y ait un début d'extrusion du joint 3 et apparition d'une fuite de lubrifiant.

Dans la configuration de invention, le joint 3 n'existe pas. Ceci a une conséquence avantageuse, liée au fait que le glissement du patin sur la piste se réalise sans qu'il y ait à vaincre le frottement du joint sur cette même piste, ce qui contribue à l'obtention d'un bas coefficient de frottement.

Il peut encore y avoir une autre conséquence, désavantageuse celle-ci, selon laquelle la graisse, qui n'est plus contenue, a naturellement tendance à s'échapper par les bords du patin. Ceci peut se produire d'autant plus facilement et rapidement que le lubrifiant mouille mieux les surfaces, c'est-à-dire l'angle de contact entre la graisse et les matériaux constituant lesdites surfaces est plus faible.

Ce qui précède peut être directement transposé d'un dispositif patin/glissière à un autre du type arbre/palier, comme décrit dans les Exemples précédents : avec un coussinet en polyimide (angle de contact avec la graisse = 60°), le lubrifiant est mieux contenu qu'avec un coussinet en bronze (angle de contact avec la graisse = 35°).

5) On peut penser qu'un autre phénomène intervient pour rendre compte du comportement nettement meilleur du palier oscillant avec arbre en acier et coussinet en polyimide que de celui du palier oscillant avec arbre en acier et coussinet en bronze.

Même si, comme on l'a vu précédemment, la graisse est mieux contenue dans le contact avec un coussinet en polyimide qu'avec un coussinet en bronze, il n'en reste pas moins que dans les deux cas, il y a consommation de lubrifiant.

Or, en présence de deux surfaces métalliques à mouiller, il est énergétiquement plus favorable pour le lubrifiant de venir au contact de celle qui présente avec la graisse l'angle de contact le plus petit, en l'occurrence l'arbre en acier plutôt que le coussinet en polyimide.

On peut donc avancer l'hypothèse qu'à chaque passage devant une cavité du coussinet en polyimide, la surface de l'arbre en acier attire un peu de la graisse contenue dans ladite cavité. La rotation de l'arbre entraîne alors un renouvellement constant du lubrifiant sur sa surface, ce qui favorise la stabilité du régime de lubrification, donc améliore l'effet de portance et la durée de vie du palier.

Dans le cas du coussinet en bronze (angle de contact du même ordre que celui de l'acier), ce phénomène n'existe pas.

Exemple 5 (comparatif).

On reproduit l'Exemple 1, sauf que pour le matériau constituant le coussinet on remplace le polyimide par de l'acier au carbone du type XC 38 recuit revêtu sur sa surface fonctionnelle de 10 μm d'un vernis organique à base de résine époxy chargée de $MoS_2$.

Le coussinet est lisse, c'est-à-dire en dehors de l'invention.

L'angle de contact θ acier XC 38 + vernis/graisse, mesuré dans les conditions de l'Exemple 1 = 70°.

Résultats des essais :

- Coefficient moyen de frottement : 0,09
- Nombre d'oscillations avant augmentation rapide du coefficient de frottement : 45 000 (usure intense en fin d'essai).

Exemple 6 (selon l'invention).

On reproduit l'Exemple 5, sauf que le coussinet est percé de 40 trous (cavités), chacun de 4 mm de diamètre, régulièrement disposés avec d (plus courte distance séparant les bords en vis-à-vis de deux cavités juxtaposées) = 4 mm.

Résultats des essais :

- Coefficient moyen de frottement : 0,0075
- Nombre d'oscillations avant augmentation rapide du coefficient de frottement : > 250 000 (essai arrêté avant son terme).

Exemple 7 (comparatif)

On reproduit l'Exemple 5, sauf que le coussinet est en acier au carbone du type XC 38 recuit non revêtu.

Le coussinet est resté lisse, c'est-à-dire en dehors de l'invention.

L'angle de contact θ acier XC 38 /graisse, mesuré dans les conditions de l'Exemple 1 = 25°

Résultats des essais :

- Coefficient moyen de frottement : instable
- Nombre d'oscillations avant augmentation rapide du coefficient de frottement : quelques dizaines puis grippage.

Exemple 8 (comparatif)

On reproduit l'Exemple 6, sauf que le coussinet percé est en acier au carbone du type XC 38 recuit non revêtu.

L'angle de contact θ acier XC 38/graisse, mesuré dans les conditions de l'Exemple 1 = 25°, c'est-à-dire en dehors de la gamme de l'invention pour la pièce percée.

Résultats des essais :

- Coefficient moyen de frottement : 0,15
- Nombre d'oscillations avant augmentation rapide du coefficient de frottement : quelques centaines puis grippage.

Commentaires sur les Exemples 5 à 8

On peut faire les mêmes commentaires que sur les Exemples 1 à 4, à ceci près que les essais se terminent par des dégradations plus franches, du type usure intense, voire grippage, consécutives à des contacts acier/acier lorsque la réserve de graisse a été consommée et/ou que le revêtement de vernis a été usé.

Exemples 9 à 14

On reproduit l'Exemple 6, avec des coussinets percés en acier revêtu de vernis, en faisant varier le nombre de trous (à diamètre constant) pour faire varier l'aire occupée par les cavités. Cette aire est mesurée sur la développée de la surface frottante et elle est exprimée en pourcentage de l'aire totale de ladite développée.

L'aire occupée par les cavités en pourcent de l'aire totale est désignée par "S".

Le nombre d'oscillations est désigné par "N".

Les résultats sont donnés dans le Tableau I.

Tableau I

| S % | 5 | 10 | 20 à 40 | 50 | 60 |
|---|---|---|---|---|---|
| N | 35 000 | 80 000 | > 250 000 | 20 000 | quelques centaines |

Commentaire

Lorsque l'aire occupée par les cavités est inférieure à 20 % de l'aire totale de la développée du palier, la durée de vie de ce dernier décroît rapidement pour atteindre celle du palier équipé d'un coussinet lisse.

Au-delà de 40 %, la décroissance est encore plus rapide et, au démontage en fin d'essais, on constate que la surface du coussinet est fortement dégradée, avec de nombreuses rayures et des arrachements d'écailles de vernis.

Exemples 15 à 17 (selon l'invention)

On reproduit l'Exemple 2, c'est-à-dire avec un coussinet percé en polyimide, mais en faisant varier la nature du matériau constituant l'arbre.

L'angle de contact graisse/arbre est désigné par θ.

Le coefficient de frottement est désigné par $C_F$.

Le nombre d'oscillations est désigné par "N".

Les résultats sont donnés dans le Tableau II .

Tableau II

| Exemple | 15 | 16 | 17 |
|---|---|---|---|
| Nature de l'arbre | Chrome dur | Acier 16 NC 6 cémenté trempé | Acier 42 CD 4 nitro-carbo-sulfuré |
| θ | 35° | 30° | 25° |
| $C_F$ | 0,01 | 0,01 | 0,01 |
| N | 150 000 | > 250 000 | 100 000 |

Les coefficients de frottement sont comparables, en revanche, les durées de vie, représentées par le nombre d'oscillations, varient de façon significative, tout en restant bonnes.

Exemple 18 (comparatif)

On reproduit l'Exemple 6 mais en faisant varier la nature du revêtement polymère.
L'acier du coussinet est revêtu sur sa surface fonctionnelle de 10 μm de PTFE (polytétrafluoréthylène).
L'angle de contact θ graisse/coussinet est de 85°, c'est-à-dire en dehors de l'invention.
Le coefficient de frottement est de l'ordre de 0,008.
Le nombre d'oscillations est de 90 000.

Exemples 19 et 20

Ces Exemples concernent une configuration de palier en rotation continue (guidage d'un arbre tournant dans l'alésage d'un carter).
Les Exemples 19 et 20 illustrent, en référence aux Figures 15 et 16, le cas de respectivement deux pièces frottantes (une seule surface fonctionnelle) et trois pièces frottantes (deux surfaces fonctionnelles).
Les conditions expérimentales sont les suivantes :

- matériau de la pièce lisse : acier à roulement type 100C6.
- matériau de la pièce percée : acier au carbone type XC38 nitruré, revêtu de 12 μm d'un vernis organique en perfluoroalcoxy.
- nature de la graisse : identique à celle de l'Exemple 1.
- diamètre de l'arbre : 30 mm.
- largeur du coussinet : 25 mm.
- pression calculée en surface projetée : 5 bars.

Les essais ont été conduits à diverses valeurs de la vitesse de rotation de l'arbre,
**[0141]** Le mouvement peut dans tous les cas se poursuivre pendant des centaines d'heures sans aucune anomalie de fonctionnement et avec un couple résistant très faible, correspondant à un coefficient extrêmement bas, de l'ordre de 0,005 à 0,0005, typique d'un frottement en très bon régime de lubrification hydrodynamique.
La différentiation entre montages à deux, ou à trois pièces frottantes, apparaît aux deux extrêmes de la plage de variation de la vitesse de rotation.
En dessous de 2 à 3000 t/mn, le système à deux pièces frottantes (Exemple 19) conduit à une meilleure reproductibilité des résultats (100 % de réussite), que celui à trois pièces frottantes (Exemple 20 : 90 % de réussite).
Au delà de 10 à 12000 t/mn, c'est l'inverse.
L'homme de l'art comprendra que bien que l'invention ait été décrite et illustrée pour des modes de réalisation particuliers, de nombreuses variantes peuvent être envisagées tout en restant dans le cadre de l'invention tel que défini dans les revendications annexées.

**Revendications**

1. Dispositif de guidage pour organes mécaniques constitué de deux pièces destinées à coopérer par frottement de glissement, une des deux pièces, dite pièce lisse (11 ), ayant une surface fonctionnelle, c'est-à-dire de frottement, lisse, et l'autre pièce, dite pièce percée (8), ayant au moins une surface fonctionnelle (7), c'est-à-dire de frottement, comportant des cavités débouchantes (9) destinées à recevoir une graisse du type pâte lubrifiante comprenant un constituant de type savon, un constituant de type huile et un additif extrême pression, **caractérisé en ce que** l'angle de contact θ entre ladite surface fonctionnelle de ladite pièce lisse et ladite graisse, mesuré à une température dite température de mesure, qui est de 15° ± 5°C en dessous de la température à laquelle il y a un début de séparation entre ledit constituant de type savon et ledit constituant de type huile, est compris entre 20 et 40 degrés, et **en ce que** le matériau de ladite pièce percée est choisi de telle sorte que l'angle de contact, mesuré à ladite température de mesure, entre ladite surface fonctionnelle de la pièce percée et ladite graisse est compris entre 45 et 75 degrés.

**2.** Dispositif selon la revendication 1, **caractérisé en ce que** le matériau constituant la pièce lisse est choisi parmi les aciers, le chrome et le nickel.

**3.** Dispositif selon la revendication 2, **caractérisé en ce que** l'acier est choisi parmi les aciers cémentés, trempés, rectifiés, les aciers trempés HF rectifiés, les aciers durcis puis revêtus de chrome dur, les aciers nitrurés, les aciers revêtus de céramique et les aciers carbonitrurés.

**4.** Dispositif selon l'une quelconque des revendications 1 à 3, **caractérisé en ce que** le matériau constituant la pièce percée est un matériau massif.

**5.** Dispositif selon l'une quelconque des revendications 1 à 3, **caractérisé en ce que** le matériau constituant la pièce percée est choisi parmi les matériaux polymères et les matériaux copolymères.

**6.** Dispositif selon la revendication 5, **caractérisé en ce que** le matériau constituant la pièce percée est choisi parmi les polyimides, les polyimides chargés, les résines époxy, les résines époxy chargées, les résines polyacétales, le polyéthylène, les fluorocarbones substitués ou non, le polyéthylène téréphtalate, le polyéthersulfone, les polyamides et le polyéther-éthercétone.

**7.** Dispositif selon l'une quelconque des revendications 1 à 5, **caractérisé en ce que** le matériau constituant la pièce percée est choisi parmi les substrats massifs, les feuillards minces roulés et les substrats recouverts d'un revêtement.

**8.** Dispositif selon la revendication 7, **caractérisé en ce que** le matériau constituant le revêtement est un matériau choisi parmi les matériaux polymères et les matériaux copolymères.

**9.** Dispositif selon la revendication 8, **caractérisé en ce que** le matériau constituant le revêtement est choisi parmi les polyimides, les polyimides chargés, les résines époxy, les résines époxy chargées, les résines polyacétales, le polyéthylène, les fluorocarbones substitués ou non, le polyéthylène téréphtalate, le polyéthersulfone les polyamides et le polyéther-éthercétone.

**10.** Dispositif selon l'une des revendications 6 et 9, **caractérisé en ce que** le fluorocarbone est du PFA (perfluoroalcoxy).

**11.** Dispositif selon la revendication 8, **caractérisé en ce que** le matériau constituant la pièce percée est choisi parmi les aciers préalablement nitrurés.

**12.** Dispositif selon la revendication 11, **caractérisé en ce que** l'acier a subi préalablement un traitement de durcissement superficiel provoquant la diffusion d'azote dans ledit acier.

**13.** Dispositif selon la revendication 12, **caractérisé en ce que** ledit traitement de durcissement est un traitement thermochimique de nitruration dans un bain fondu de cyanates et carbonates de métaux alcalins.

**14.** Dispositif selon la revendication 13, **caractérisé en ce que** le bain fondu contient en outre une quantité d'au moins une espèce soufrée.

**15.** Dispositif selon l'une quelconque des revendications 1 à 14, **caractérisé en ce que** les cavités sont réparties sur sensiblement la totalité de la surface de la pièce percée.

**16.** Dispositif selon la revendication 15, **caractérisé en ce qu'**au moins trois cavités contribuent à supporter une charge appuyant les deux pièces.

**17.** Dispositif selon la revendication 15, **caractérisé en ce que** l'aire occupée par les cavités sur la développée de la surface fonctionnelle de la pièce percée représente entre environ 20 et environ 40 % de l'aire totale de ladite développée.

**18.** Dispositif selon l'une quelconque des revendications 1 à 17, **caractérisé en ce que** les cavités sont sensiblement égales entre elles.

**19.** Dispositif selon l'une quelconque des revendications 1 à 17, **caractérisé en ce que** les cavités sont sensiblement régulièrement réparties sur la totalité de la surface de la pièce percée.

**20.** Dispositif selon l'une quelconque des revendications 1 à 17, **caractérisé en ce que** les cavités ne sont sensiblement pas égales entre elles.

**21.** Dispositif selon l'une quelconque des revendications 1 à 17 et 20, **caractérisé en ce que** les cavités sont sensiblement irrégulièrement réparties sur la totalité de la surface de la pièce percée.

**22.** Dispositif selon l'une des revendications 20 et 21, **caractérisé en ce que** la plus courte distance entre les bords des deux cavités juxtaposées est supérieure à environ 2 mm.

**23.** Dispositif selon l'une quelconque des revendications 1 à 22, **caractérisé en ce que** la surface débouchante de chaque cavité est comprise entre environ 3 $mm^2$ et environ 40 $mm^2$.

**24.** Dispositif selon l'une des revendications 20 et 21, **caractérisé en ce que** la plus courte distance entre les bords des deux cavités juxtaposées est supérieure à environ 2 mm et la surface débouchante de chaque cavité est comprise entre environ 10 $mm^2$ et environ 30 $mm^2$.

**25.** Dispositif selon l'une quelconque des revendications 1 à 24, **caractérisé en ce que** les cavités débouchant sur la surface fonctionnelle de la pièce percée ne communiquent pas entre elles du côté de ladite surface fonctionnelle de ladite pièce percée.

**26.** Dispositif selon l'une quelconque des revendications 1 à 25, **caractérisé en ce que** les cavités débouchant sur la surface fonctionnelle de la pièce percée ne communiquent pas entre elles du côté d'une surface non fonctionnelle de ladite pièce percée.

**27.** Dispositif selon l'une quelconque des revendications 1 à 25, **caractérisé en ce que** les cavités débouchant sur la surface fonctionnelle de la pièce percée communiquent entre elles du côté d'une surface non fonctionnelle de ladite pièce percée par un système de canaux.

**28.** Dispositif selon la revendication 27, **caractérisé en ce qu'**un couvercle (12) recouvre les cavités.

**29.** Dispositif selon l'une quelconque des revendications 1 à 28, **caractérisé en ce que** les cavités sont cylindriques.

**30.** Dispositif arbre/palier selon l'une quelconque des revendications 1 à 29, **caractérisé en ce que** l'arbre est la pièce lisse et le palier est la pièce percée.

**31.** Dispositif glissière/patin selon l'une quelconque des revendications 1 à 29, **caractérisé en ce que** la glissière est la pièce lisse et le patin est la pièce percée.

**32.** Dispositif rotule/coupelle selon l'une quelconque des revendications 1 à 29, **caractérisé en ce que** la rotule est la pièce lisse et la coupelle est la pièce percée.

**33.** Dispositif selon la revendication 30, **caractérisé en ce que** le palier a deux surfaces fonctionnelles.

**Patentansprüche**

**1.** Führungsvorrichtung für mechanische Körper, umfassend zwei Teile, welche mittels Gleitreibung zusammenwirken, wobei eines der beiden Teile, bezeichnet als glattes Teil (11), eine glatte funktionale, d. h. Reiboberfläche aufweist, und das andere Teil, bezeichnet als ausgenommenes Teil (8), mindestens eine funktionale, d. h. Reiboberfläche aufweist, welche bzw. welches Ausnehmungen (9) zur Aufnahme eines Schmiermittels vom Typ pastöses Schmiermittel aufweist, welches einen Bestandteil vom Typ Seife, einen Bestandteil vom Typ Öl und ein Hochdruckadditiv enthält, **dadurch gekennzeichnet, daß** der Kontaktwinkel θ zwischen der funktionalen Oberfläche des glatten Teils und dem Schmiermittel, gemessen bei einer als Meßtemperatur bezeichneten Temperatur, welche etwa 15 °C ± 5 °C unterhalb der Temperatur liegt, bei welcher eine Trennung zwischen dem Bestandteil vom Typ Seife und dem Bestandteil vom Typ Öl einsetzt, 20 bis 40 Grad beträgt und daß das Material des ausgenommenen Teils derart ausgewählt ist, daß der bei der Meßtemperatur gemessene Kontaktwinkel zwischen der funktionalen Oberfläche des ausgenommen Teils und dem Schmiermittel 45 bis 75 Grad beträgt.

2. Vorrichtung nach Anspruch 1, **dadurch gekennzeichnet, daß** das Material des glatten Teils ausgewählt ist aus Stahl, Chrom und Nickel.

3. Vorrichtung nach Anspruch 2, **dadurch gekennzeichnet, daß** der Stahl ausgewählt ist aus Zementstahl, gehärtetem bzw. getempertem Stahl, gezogenem Stahl, gezogenem und gehärtetem bzw. getempertem HF-Stahl, gehärtetem und anschließend hartchrombeschichtetem Stahl, nitriertem Stahl, keramisch beschichtetem Stahl und carbonitriertem Stahl.

4. Vorrichtung nach einem der Ansprüche 1 bis 3, **dadurch gekennzeichnet, daß** das Material des ausgenommenen Teils ein massives Material ist.

5. Vorrichtung nach einem der Ansprüche 1 bis 3, **dadurch gekennzeichnet, daß** das Material des ausgenommenen Teils ausgewählt ist aus polymeren Materialien und copolymeren Materialien.

6. Vorrichtung nach Anspruch 5, **dadurch gekennzeichnet, daß** das Material des ausgenommenen Teils ausgewählt ist aus Polyimiden, geladenen Polyimiden, Epoxyharzen, geladenen Epoxyharzen, Polyacetalharzen, Polyethylen, gegebenenfalls substituierten Fluorkohlen(wasser)stoffen, Polyethylenterephthalat, Polyethersulfon, Polyamiden und Polyetheretherketon.

7. Vorrichtung nach einem der Ansprüche 1 bis 5, **dadurch gekennzeichnet, daß** das Material des ausgenommenen Teils ausgewählt ist aus massiven Substraten, dünnem Walz- bzw. Bandstahl und mit einer Beschichtung überzogenen Substraten.

8. Vorrichtung nach Anspruch 7, **dadurch gekennzeichnet, daß** das Beschichtungsmaterial ausgewählt ist aus polymeren Materialien und copolymeren Materialien.

9. Vorrichtung nach Anspruch 8, **dadurch gekennzeichnet, daß** das Beschichtungsmaterial ausgewählt ist aus Polyimiden, geladenen Polyimiden, Epoxyharzen, geladenen Epoxyharzen, Polyacetalharzen, Polyethylen, gegebenenfalls substituierten Fluorkohlen(wasser)stoffen, Polyethylenterephthalat, Polyethersulfon, Polyamiden und Polyetheretherketon.

10. Vorrichtung nach einem der Ansprüche 6 und 9, **dadurch gekennzeichnet, daß** der Fluorkohlen(wasser)stoff PFA (Perfluoralkoxy) ist.

11. Vorrichtung nach Anspruch 8, **dadurch gekennzeichnet, daß** das Material des ausgenommenen Teils ausgewählt ist aus Stahl, der zuvor nitriert worden ist.

12. Vorrichtung nach Anspruch 11, **dadurch gekennzeichnet, daß** der Stahl zuvor einer Behandlung zur Oberflächenhärtung unterzogen wird, welche zur Diffusion von Stickstoff in den Stahl führt.

13. Vorrichtung nach Anspruch 12, **dadurch gekennzeichnet, daß** die Behandlung zur Härtung eine thermochemische Nitrier(härtungs)behandlung in einer Schmelze von Alkalimetallcyanaten und -carbonaten ist.

14. Vorrichtung nach Anspruch 13, **dadurch gekennzeichnet, daß** die Schmelze außerdem eine Menge mindestens einer Schwefelverbindung enthält.

15. Vorrichtung nach einem der Ansprüche 1 bis 14, **dadurch gekennzeichnet, daß** die Ausnehmungen im wesentlichen auf der gesamten Oberfläche des ausgenommenen Teils verteilt sind.

16. Vorrichtung nach Anspruch 15, **dadurch gekennzeichnet, daß** mindestens drei Ausnehmungen an der Aufnahme einer Last, welche die beiden Teile aufeinanderdrückt, beteiligt sind.

17. Vorrichtung nach Anspruch 15, **dadurch gekennzeichnet, daß** die von den Ausnehmungen gebildete Fläche auf der Abwicklung der funktionalen Oberfläche des ausgenommenen Teils zwischen etwa 20 % und etwa 40 % der Gesamtfläche der Abwicklung beträgt.

18. Vorrichtung nach einem der Ansprüche 1 bis 17, **dadurch gekennzeichnet, daß** die Ausnehmungen im wesentlichen untereinander gleich sind.

19. Vorrichtung nach einem der Ansprüche 1 bis 17, **dadurch gekennzeichnet, daß** die Ausnehmungen im wesentlichen gleichmäßig auf der gesamten Oberfläche des ausgenommenen Teils verteilt sind.

20. Vorrichtung nach einem der Ansprüche 1 bis 17, **dadurch gekennzeichnet, daß** die Ausnehmungen im wesentlichen untereinander nicht gleich sind.

21. Vorrichtung nach einem der Ansprüche 1 bis 17 und 20, **dadurch gekennzeichnet, daß** die Ausnehmungen im wesentlichen unregelmäßig auf der gesamten Oberfläche des ausgenommenen Teils verteilt sind.

22. Vorrichtung nach einem der Ansprüche 20 und 21, **dadurch gekennzeichnet, daß** der kürzeste Abstand zwischen den Rändern von zwei nebeneinanderliegenden Ausnehmungen größer als etwa 2 mm ist.

23. Vorrichtung nach einem der Ansprüche 1 bis 22, **dadurch gekennzeichnet, daß** die ausgenommene Oberfläche der jeweiligen Ausnehmung etwa 3 mm$^2$ bis etwa 40 mm$^2$ beträgt.

24. Vorrichtung nach einem der Ansprüche 20 und 21, **dadurch gekennzeichnet, daß** der kürzeste Abstand zwischen den Rändern von zwei nebeneinanderliegenden Ausnehmungen größer als etwa 2 mm ist und die ausgenommene Oberfläche der jeweiligen Ausnehmung etwa 10 mm$^2$ bis etwa 30 mm$^2$ beträgt.

25. Vorrichtung nach einem der Ansprüche 1 bis 24, **dadurch gekennzeichnet, daß** die sich zur funktionalen Oberfläche des ausgenommenen Teils öffnenden Ausnehmungen auf der Seite der funktionalen Oberfläche des ausgenommenen Teils nicht untereinander in Verbindung stehen.

26. Vorrichtung nach einem der Ansprüche 1 bis 25, **dadurch gekennzeichnet, daß** die sich zur funktionalen Oberfläche des ausgenommenen Teils öffnenden Ausnehmungen auf der Seite einer nichtfunktionalen Oberfläche des ausgenommenen Teils nicht untereinander in Verbindung stehen.

27. Vorrichtung nach einem der Ansprüche 1 bis 25, **dadurch gekennzeichnet, daß** die sich zur funktionalen Oberfläche des ausgenommenen Teils öffnenden Ausnehmungen auf der Seite einer nichtfunktionalen Oberfläche des ausgenommenen Teils mittels eines Kanalsystems untereinander in Verbindung stehen.

28. Vorrichtung nach Anspruch 27, **dadurch gekennzeichnet, daß** eine Abdekkung (12) die Ausnehmungen abdeckt.

29. Vorrichtung nach einem der Ansprüche 1 bis 28, **dadurch gekennzeichnet, daß** die Ausnehmungen zylindrisch sind.

30. Welle/Lager-Vorrichtung nach einem der Ansprüche 1 bis 29, **dadurch gekennzeichnet, daß** die Welle das glatte Teil und das Lager das ausgenommene Teil ist.

31. Gleitbahn/Schlitten-Vorrichtung nach einem der Ansprüche 1 bis 29, **dadurch gekennzeichnet, daß** die Gleitbahn das glatte Teil und der Schlitten das ausgenommene Teil ist.

32. Kugel/Schale-Vorrichtung nach einen der Ansprüche 1 bis 29, **dadurch gekennzeichnet, daß** die Kugel das glatte Teil und die Schale das ausgenommene Teil ist.

33. Vorrichtung nach Anspruch 30, **dadurch gekennzeichnet, daß** das Lager zwei funktionale Oberflächen aufweist.

**EP 0 987 456 B1**

**Claims**

1. Guiding device for mechanical members, which consists of two parts intended to interact by sliding friction, one of the two parts, called the smooth part (11), having a smooth, functional, that is to say friction, surface and the other part, called the pierced part (8), having at least one functional, that is to say friction, surface (7) which includes emergent cavities (9) intended to accommodate a grease of the lubricating-paste type comprising a soap-type constituent, an oil-type constituent and an extreme-pressure additive, **characterized in that** the contact angle θ between said functional surface of said smooth part and said grease, measured at a temperature called the measurement temperature, which is 15° ± 5°C below the temperature at which the onset of separation between said soap-type constituent and said oil-type constituent occurs, is between 20 and 40 degrees and **in that** the material of said pierced part is chosen in such a way that the contact angle, measured at said measurement temperature, between said functional surface of the pierced part and said grease is between 45 and 75 degrees.

2. Device according to Claim 1, **characterized in that** the material of which the smooth part is made is chosen from among steels, chromium and nickel.

3. Device according to Claim 2, **characterized in that** the steel is chosen from among case-hardened, quench-hardened and ground steels, ground HF quench-hardened steels, steels that are hardened and then coated with hard chromium, nitrided steels, ceramic-coated steels and carbonitrided steels.

4. Device according to any one of Claims 1 to 3, **characterized in that** the material of which the pierced part is made is a bulk material.

5. Device according to any one of Claims 1 to 3, **characterized in that** the material of which the pierced part is made is chosen from among polymer materials and copolymer materials.

6. Device according to Claim 5, **characterized in that** the material of which the pierced part is made is chosen from among polyimides, filled polyimides, epoxy resins, filled epoxy resins, polyacetal resins, polyethylene, substituted or unsubstituted fluorocarbons, polyethylene terephthalate, polyethersulphone, polyamides and polyetheretherketone.

7. Device according to any one of Claims 1 to 5, **characterized in that** the material of which the pierced part is made is chosen from among bulk substrates, thin rolled sheets and substrates covered with a coating.

8. Device according to Claim 7, **characterized in that** the material of which the coating is made is a material chosen from among polymer materials and copolymer materials.

9. Device according to Claim 8, **characterized in that** the material of which the coating is made is chosen from among polyimides, filled polyimides, epoxy resins, filled epoxy resins, polyacetal resins, polyethylene, substituted or unsubstituted fluorocarbons, polyethyelene terephthalate, polyethersulphone, polyamides and polyetheretherketone.

10. Device according to either of Claims 6 and 9, **characterized in that** the fluorocarbon is PFA (perfluoroalkoxy) .

11. Device according to Claim 8, **characterized in that** the material of which the pierced part is made is chosen from among prenitrided steels.

12. Device according to Claim 11, **characterized in that** the steel has been subjected before hand to a surface hardening treatment causing nitrogen to diffuse into said steel.

13. Device according to Claim 12, **characterized in that** said hardening treatment is a thermochemical nitriding treatment in a molten bath of alkali metal cyanates and carbonates.

14. Device according to Claim 13, **characterized in that** the molten bath furthermore contains an amount of at least one sulphur species.

15. Device according to any one of Claims 1 to 14, **characterized in that** the cavities are distributed over practically the entire surface of the pierced part.

16. Device according to Claim 15, **characterized in that** at least three cavities contribute to supporting a load applied to the two parts.

17. Device according to Claim 15, **characterized in that** the area occupied by the cavities on the development of the functional surface of the pierced part represents between approximately 20 and approximately 40% of the total area of said development.

18. Device according to any one of Claims 1 to 17, **characterized in that** the cavities are more or less the same as each other.

19. Device according to any one of Claims 1 to 17, **characterized in that** the cavities are distributed more or less regularly over the entire surface of the pierced part.

20. Device according to any one of Claims 1 to 17, **characterized in that** the cavities are not more or less the same as each other.

21. Device according to any one of Claims 1 to 17 and 20, **characterized in that** the cavities are distributed more or less irregularly over the entire surface of the pierced part.

22. Device according to either of Claims 20 and 21, **characterized in that** the shortest distance between the edges of two juxtaposed cavities is greater than approximately 2 mm.

23. Device according to any one of Claims 1 to 22, **characterized in that** the emergent surface of each cavity has an area of between approximately 3 mm$^2$ and approximately 40 mm$^2$.

24. Device according to one of Claims 20 and 21, **characterized in that** the shortest distance between the edges of two juxtaposed cavities is greater than approximately 2 mm and the emergent surface of each cavity has an area of between approximately 10 mm$^2$ and approximately 30 mm$^2$.

25. Device according to any one of Claims 1 to 24, **characterized in that** the cavities emerging on the functional surface of the pierced part do not communicate with each other on the side containing said functional surface of said pierced part.

26. Device according to any one of Claims 1 to 25, **characterized in that** the cavities emerging on the functional surface of the pierced part do not communicate with each other on the side containing a non-functional surface of said pierced part.

27. Device according to any one of Claims 1 to 25, **characterized in that** the cavities emerging on the functional surface of the pierced part communicate with each other on the side containing a non-functional surface of said pierced part via a system of channels.

28. Device according to Claim 27, **characterized in that** a cover (12) covers the cavities.

29. Device according to any one of Claims 1 to 28, **characterized in that** the cavities are cylindrical.

30. Shaft/bearing device according to any one of Claims 1 to 29, **characterized in that** the shaft is the smooth part and the bearing is the pierced part.

31. Slideway/runner device according to any one of Claims 1 to 29, **characterized in that** the slideway is the smooth part and the runner is the pierced part.

32. Ball/socket device according to any one of Claims 1 to 29, **characterized in that** the ball is the smooth part and the socket is the pierced part.

33. Device according to Claim 30, **characterized in that** the bearing has two functional surfaces.

FIG 1

FIG 2

FIG 3

FIG 4

FIG 5

FIG 7

FIG 8

FIG 6

FIG 9

FIG 10

FIG 11

FIG 12

FIG 13.

FIG.14

FIG.15

FIG.16